Europäisches Patentamt

European Patent Office

Office européen des brevets

(11) Veröffentlichungsnummer: **0 312 696 B1**

## EUROPÄISCHE PATENTSCHRIFT

(45) Veröffentlichungstag der Patentschrift: **20.05.92**

(21) Anmeldenummer: **88109625.9**

(22) Anmeldetag: **16.06.88**

(51) Int. Cl.⁵: **B66C 1/02**, B65G 47/91, E01C 19/52

(54) **Saugheber zum Heben und Verlegen von Betonteilen.**

(30) Priorität: **23.10.87 DE 3735864**

(43) Veröffentlichungstag der Anmeldung:
**26.04.89 Patentblatt  89/17**

(45) Bekanntmachung des Hinweises auf die
Patenterteilung:
**20.05.92 Patentblatt  92/21**

(84) Benannte Vertragsstaaten:
**ES GB IT**

(56) Entgegenhaltungen:
EP-A- 0 120 291      DE-A- 2 440 691
DE-A- 2 501 888      DE-A- 2 612 952
FR-A- 2 547 289      GB-A- 1 221 233
US-A- 3 302 967      US-A- 3 637 249

(73) Patentinhaber: **Göpfert, Reinhard, Dipl.-Ing.
Hannoversche Strasse 156
W-3070 Nienburg(DE)**

(72) Erfinder: **Göpfert, Reinhard, Dipl.-Ing.
Hannoversche Strasse 156
W-3070 Nienburg(DE)**

(74) Vertreter: **Arendt, Helmut, Dipl.-Ing.
Patentanwalt Bergiusstrasse 2 c
W-3000 Hannover 51(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen Saugheber zum Heben und Verlegen von Hebegut mit einem hohen spezifischen Gewicht, beispielsweise für das Heben von Betonteilen und Betonsteinen sowie Klinker und Naturpflastersteinen mit mehreren an der Unterseite des Saughebers angeordneten, die einzelnen Teile erfassenden, als Faltenbälge ausgebildeten axial- und winkelbeweglichen Saugstempeln.

Zum Verlegen von Pflastersteinen, insbesondere Verbundsteinen, werden in zunehmendem Maße Maschinen eingesetzt. Es handelt sich um selbstfahrende Vorrichtungen mit einem Fahrgestell und einem an wenigstens einem verstellbaren Ausleger befestigten rechteckigen Saugheber zum Anheben und Versetzen der Pflastersteine, wie sie insbesondere in den deutschen Patentschriften 32 43 045; 33 24 441; 33 42 424 und der europäischen Patentanmeldung 84101823.7 beschrieben sind. Durch ihren Einsatz wird erst das wirtschaftliche Herstellen großer befahrbarer Flächen aus Verbundsteinen ermöglicht. Der Saugheber eines solchen Gerätes ist jedoch nur in der Lage, die bereits werkseitig hergestellten Steinverbände anzuheben und ohne jede Veränderung der Position der einzelnen Steinreihen zu verlegen.

Werksseitig wird angestrebt, die Herstellungsformen für Betonsteine möglichst vollständig auszulasten. Steine, die nicht durch Formschluß miteinander verbunden sind, können im Verband mit Kreuzfugen hergestellt werden. Kreuzfugen sind jedoch bei verlegten Steinverbänden nicht erwünscht, da sie rascher zu einer Lockerung des Verbandes führen können. Insbesondere bei Deckwerksteinen, die wenigstens zeitweise von Wasser überspült werden, erleichtern Kreuzfugen dem Wasser das Aus- und Unterspülen der Steinfugen. Kreuzfugen setzen der Wasserströmung keinen genügenden Widerstand entgegen. Es ist deshalb vorgeschrieben, Steine, die von Wasser überspült werden, in Läuferverbänden zu versetzen, d.h. die Steinreihen müssen gegeneinader versetzt verlegt werden. Die aus den Herstellungsformen entnommenen Steinlagen mit Kreuzfugen sind deshalb zum direkten maschinellen Verlegen mit den bekannten Vorrichtungen nicht geeignet. Der Handarbeit sind jedoch bei großen Steinen, wie beispielsweise Deckwerksteinen, Grenzen gesetzt. Deckwerksteine müssen, um ihren Aufgaben gerecht zu werden, möglichst groß und schwer sein und erreichen Gewichte von mehr als 50 kg.

Aufgabe der Erfindung ist es, einen Saugheber nach dem eingangs genannten Gattungsbegriff zu schaffen, mit dem es möglicht ist, Steinlagen, die mit Kreuzfugen hergestellt und unter Einhaltung dieses Fugenbildes an die Baustelle geliefert werden, zu heben und im Läuferverband zu verlegen.

Die Erfindung zur Lösung dieser Aufgabe zeichnet sich dadurch aus, daß die Saugstempel an den Unterseiten mehrerer langgestreckter, nebeneinander angeordneter Hohlprofile, in welchen Vakuum herrscht, angebracht sind, von welchen jedes zweite Hohlprofil um wenigstens eine halbe Steinlänge in Längsrichtung verschiebbar ausgebildet ist.

Mit einem solchen Saugheber ist die Verlegevorrichtung in der Lage, einzelne Steinreihen nach dem Anheben einer Schicht mit Kreuzfugen um wenigstens eine halbe Steinlänge zu verschieben. Dadurch können insbesondere die großen und schweren Deckwerksteine im Läuferverband auch maschinell verlegt werden. Bei einem beispielsweise aus fünf Saugreihen bestehenden Saugheber können die beiden äußeren und die mittlere starr und die dazwischen befindlichen beiden Saugreihen in Längsrichtung hydraulisch verschiebbar ausgebildet sein. Die drei starren Hohlprofile mit ihren Saugstempeln sind miteinander durch hohle Querprofile verbunden, in denen ebenfalls das zum Heben der Steine notwendige Vakuum herrscht. Von den Querprofilen gehen Anschlüsse für den Vakuumerzeuger aus. Die einander zugewandten Seiten der Hohlprofile sind mit Tragleisten versehen, die ineinanderfassen und dadurch die zwischen den starren Profilen befindlichen verschiebbaren Hohlprofile tragen. Die Vakuumverbindungen zwischen den verschiebbaren Hohlprofilen und den starren können mit flexiblen Leitungen, beispielsweise Druckschläuchen hergestellt werden. Sofern der Saugheber mit Richtbacken versehen ist, sind diese an drei Seiten angeordnet. Über die richtbackenfreie Seite können die bewegbaren Hohlprofile mit den Saugstempeln vorgeschoben werden. Sowohl die starr befestigten als auch indirekt die verschiebbaren Hohlprofile werden durch die quergerichteten Hohlprofile getragen.

An der Oberseite der Hohlprofile können die hydraulisch betätigbaren Stellzylinder für die zur Verschiebung notwendige Stellkraft angeordnet sein.

Für die die Verschiebung von Hohlprofilen bewirkenden Stellzylinder ist zwar eine separate Steuerung, beispielsweise von Hand möglich, um die zur Bildung des Läuferverbandes notwendige Bewegung zu jedem beliebigen Zeitpunkt während der geöffneten Position der Richtbacken einleiten zu können. Besonders vorteilhaft ist jedoch ihre Verknüpfung mit den Stellzylindern der Richtbacken bzw. mit deren Druckleitungen im Nebenschluß. Dadurch kann die Bewegung der Hohlprofile automatisch nach dem Öffnen der Richtbacken eingeleitet werden. Sobald diese ihre obere Anschlagstellung erreicht haben, setzt der sich dann einstellende hydraulische Maximaldruck über die Nebenschlußleitungen bis zu den Stellzylindern für die Hohlprofile durch und ermöglicht deren Verschiebung. Um zu gewährleisten, daß in jedem Fall die Verschiebung erst dann beginnt, wenn die Richtbacken voll geöffnet sind, können die Hohlprofile zusätzlich mit einer der Verschiebung entgegenwirkenden Federvorspannung belastet werden. Die Federvorspannung ist so hoch gewählt, daß sie durch den während der Öffnungsbewegung der Richtbacken herrschenden Teildruck des hydraulischen Arbeitsmittels nicht überwunden werden kann. Zum Einsatz können unmittelbar im Stellzylinder angeordnete Rückstellfedern gelangen, welche die Stellkolben in der entsprechenden Richtung belasten.

Es ist von besonderem Vorteil, wenn die Saugöffnungen benachbarter Saugstempel in einen auf die Oberfläche des zu hebenden Gutes setzbaren Saugraum mit gemeinsam wirkender Saugfläche münden, deren Form außerdem der Oberflächenwölbung des Hebeguts anpaßbar ist. Hierdurch wird erreicht, daß der Raum zwischen den einzelnen Saugstempeln erfaßt und in die jeweils wirksamen Saugräume der Saugstempel mit einbezogen werden können und dadurch die Saugkraft ohne Erhöhung der Saugleistung der Vakuumpumpen vergrößert wird. Die Verbindung wenigstens zweier benachbarter Saugstempel durch eine Saugplatte aus elastomerem Material mit einem gemeinsamen Saugraum reicht aus, um beispielsweise die bisher von zwei Saugstempeln erfaßten, jedoch nicht anhebbaren Betonteile, die beispielsweise eine poröse Struktur haben, heben zu können. Durch die Flexibilität der Saugplatte kann sich der vergrößerte Saugraum der Oberflächenform eines zu hebenden Objekts anpassen. Dadurch wird eine noch größere Sicherheit bei der Übertragung der Saugkraft erreicht.

Weitere, den Anmeldungsgegenstand vorteilhaft gestaltende Merkmale sind in den Unteransprüchen angegeben.

In der Zeichnung sind Ausführungsbeispiele der Erfindung rein schematisch dargestellt und nachstehend erläutert.

Es zeigen:

Fig. 1 die schematische Darstellung einer Anordnung mehrerer paralleler Hohlprofile, von welchen drei fest und zwei verschiebbar ausgebildet sind,

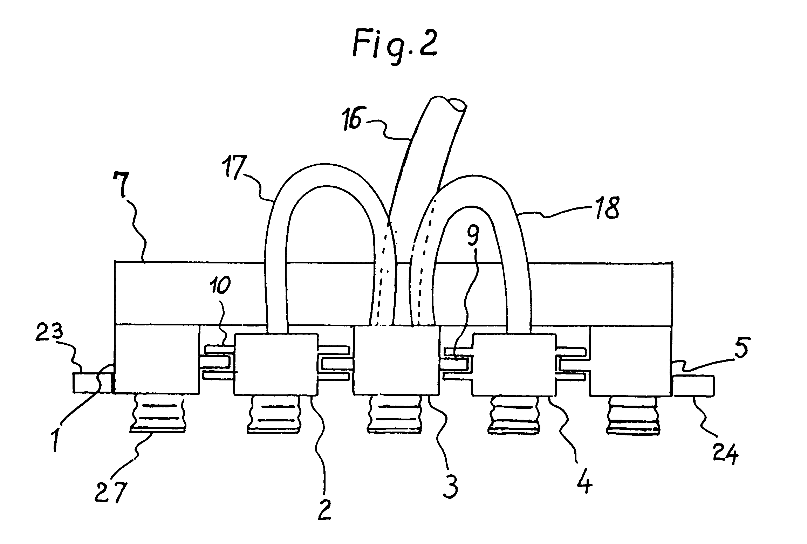

Fig. 2 eine Stirnansicht der Anordnung gemäß Figur 1,

Fig. 3 die schaubildliche Darstellung einer einsatzfähigen Ausführungsform mit geschlossenen Richtbacken,

Fig. 4 die Ausführung gemäß Figur 3 mit geöffneten Richtbacken und zwei in Längsrichtung verschobenen Hohlprofilen zur Bildung eines Läuferverbandes,

Fig. 5 die schaubildliche Darstellung eines einsatzfähigen Gerätes gemäß Figur 4 unter einem flacheren Betrachtungswinkel,

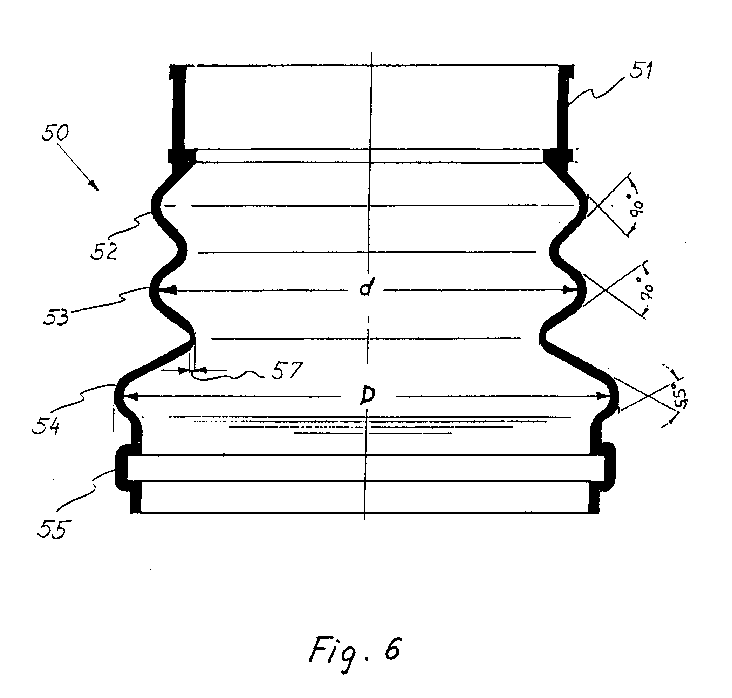

Fig. 6 den Längsschnitt durch einen Faltenbalg,

Fig. 7 den Längsschnitt durch zwei in einen gemeinsamen Saugraum mündende Saugstempel,

Fig. 8 einen Schnitt um 90° versetzt durch einen der beiden Saugstempel und die Saugplatte nach Fig. 7,

Fig. 9 eine auf das zu hebende Gut gesetzte Saugplatte in leicht angehobener Position und

Fig. 10 eine freischwebende Last an der Saugplatte gemäß Fig. 9.

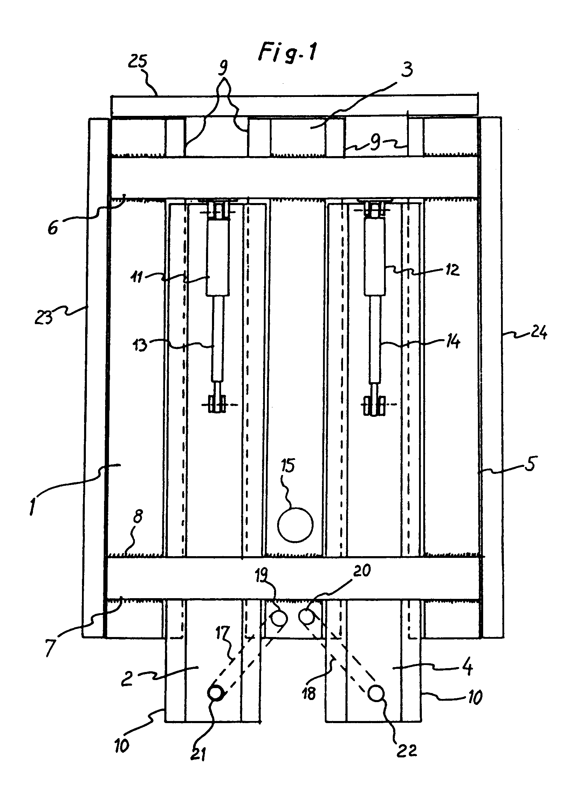

Die Schemaskizze gemäß Fig. 1 zeigt fünf parallel nebeneinander angeordnete Hohlprofile 1 bis 5. Von diesen sind die Profile 2 und 4 in Längsrichtung verschiebbar angeordnet. Die starr ausgeführten Hohlprofile 1, 3 und 5 sind mit Querprofilen 6 und 7 verschweißt. Die Schweißnähte sind mit 8 bezeichnet.

Die verschiebbaren Hohlprofile 2 und 4 werden von den starren Hohlprofilen 1, 3 und 5 getragen. Zu diesem Zweck sind die einander zugekehrten Seiten der Hohlprofile mit Trag- und Führungsleisten 9 und 10 versehen. Die Trag- und Führungsleisten 9 befinden sich an den starren Hohlprofilen, während die Leisten 10 an den verschiebbaren angeordnet sind und die starren Trag- und Führungsleisten 9 zu beiden Seiten einfassen. Durch die Kraft der hydraulischen Druckzylinder, die an dem Querprofil 6 angelenkt sind und mit ihren Kolbenstangen 13 und 14 an den Hohlprofilen 2 und 4 angreifen, können diese in Längsrichtung verschoben werden.

Die Querprofile 6 und 7 sind ebenfalls hohl ausgebildet, um das Vakuum gleichmäßig zunächst über die starren Hohlprofile zu verteilen. Zu diesem Zweck sind zwischen den starren und den Querprofilen Verbindungsöffnungen vorgesehen. Das mittlere Profil 3 ist mit einer Anschlußöffnung 15 für einen Vakuumzuführschlauch 16 versehen. Das Vakuum in den verschiebbaren Hohlprofilen 2 und 4 entsteht durch flexible Verbindungen 17 und 18, die das mittlere, starre Hohlprofil 3 über Öffnungen 19 und 20 mit den Profilen 2 und 4 verbinden. Die Anschlußöffnungen dieser Profile sind mit 21 und 22 bezeichnet.

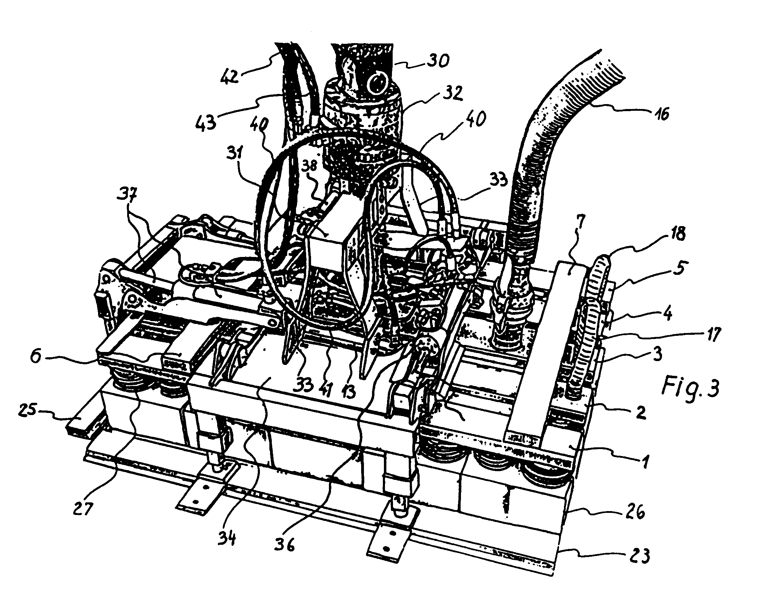

Die gesamte Profilanordnung ist an drei Seiten von Richtbacken 23 bis 25 eingefaßt. Mit ihnen werden vor dem Anheben mit Hilfe der Saugstempel 27 die Steinlagen exakt ausgerichtet. Die Steine sind mit 26 bezeichnet (Figuren 3 bis 5).

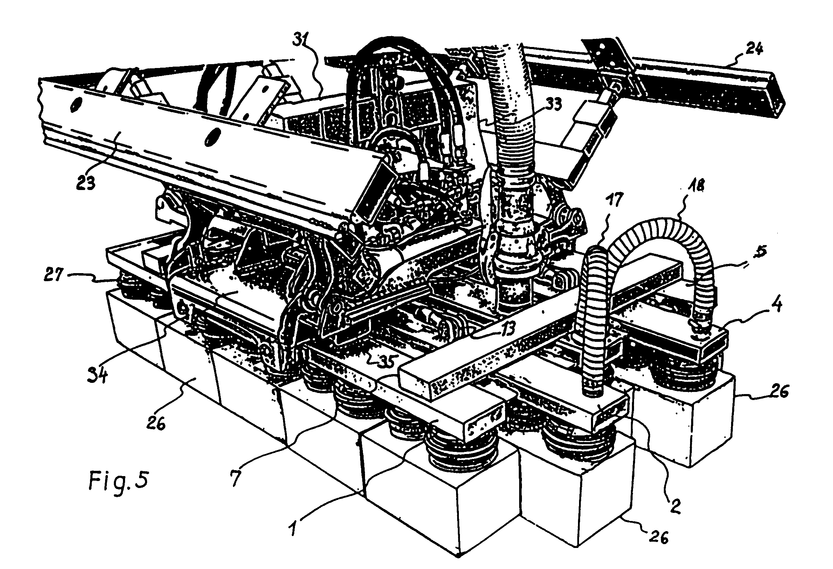

Der Saugheber kann pendelartig am Tragkopf 30 eines nicht dargestellten Hebearms eines Transportfahrzeugs aufgehängt werden. Zwischen dem Tragkopf und einem Tragjoch 31 des Saughebers ist ein hydraulisch angetriebener Schwenkkopf 32 angeordnet, mit dem der Saugheber stufenlos um 360° geschwenkt werden kann, wobei die Schwenkachse durch die pendelartige Aufhängung stets vertikal gehalten werden kann. Das Tragjoch ist mittels entsprechend dimensionierter Tragbleche 33 mit Tragplatten 34 verbunden, die ihrerseits über kastenförmige Verbindungsprofile 35 (Fig. 5) die Tragkraft auf die äußeren starren Hohlprofile 1 und 5 übertragen können.

Zum Öffnen und Schließen der Richtbacken 23, 24 und 25 sind ebenfalls hydraulische Kolben-Zylindereinheiten 36, 37 und 38 Fig. 3) vorgesehen. Alle hydraulischen Stellzylinder werden über hydraulische Versorgungsleitungen 40 und 41 mit dem Arbeitsmittel versorgt. Zwei zusätzliche Leitungen 42 und 43 führen zum hydraulischen Schwenkkopf 32.

Von den Versorgungsleitungen 40 und 41 führen nicht näher dargestellte Abzweigungen zu den einzelnen Stellzylindern. Dabei sind die Stellzylinder für das Verschieben der beiden beweglichen Hohlprofile im Nebenschluß mit den Versorgungsleitungen 40 und 41 oder im Nebenschluß mit einigen davon abzweigenden Leitungen verbunden.

Zum Erfassen und Anheben einer Steinlage, wie beispielsweise in Figur 3 dargestellt, wird der Saugheber mit nach oben geschwenkten Richtbacken 23 bis 25 mit seinen Saugstempeln ohne Vakuum auf die Steine gesetzt. Sodann werden die Richtbacken nach unten geschwenkt und gegen die Steine gepreßt, wie es Figur 3 zeigt. Da zunächst noch kein Vakuum in den Hohlprofilen und damit in den Saugstempeln 27 herrscht, können die Steine durch das Anpressen der Richtbacken exakt ausgerichtet werden. Nach dem Ausrichten wird über die Schlauchleitung 16 mit erheblichem Querschnitt das Vakuum in sämtlichen Hohlprofilen erzeugt, das sich bis zu den Saugstempeln fortsetzt und die Steine fest gegen deren untere Kanten preßt.

Nach dem Erzeugen des Vakuums werden die Richtbacken nach oben geschwenkt. Sobald sie ihre oberen Endlagen erreichen, steigt der Druck in den Stellzylindern der Richtbacken auf seinen Maximalwert an. Gleichzeitig steigt der Druck des hydraulischen Arbeitsmittels in den Versorgungsleitungen 40 und 41 auf seinen Maximalwert und setzt sich über die mit ihnen im Nebenschluß befindlichen Versorgungsleitungen bis in die Stellzylinder 11 und 12 fort. Der Maximaldruck ist so ausgelegt, daß er in der Lage ist, für eine Verschiebung der bewegbaren Hohlprofile 2 und 4 mit den daran hängenden Steinen zu sorgen. Durch diese sinnvolle Verknüpfung der Versorgungsleitungen für die Zylinder 11 und 12 mit den Stellzylindern für die Richtbacken wird sichergestellt, daß die Verschiebung zweier Steinreihen erst nach dem Hochschwenken der Richtbacken und zwar automatisch geschieht.

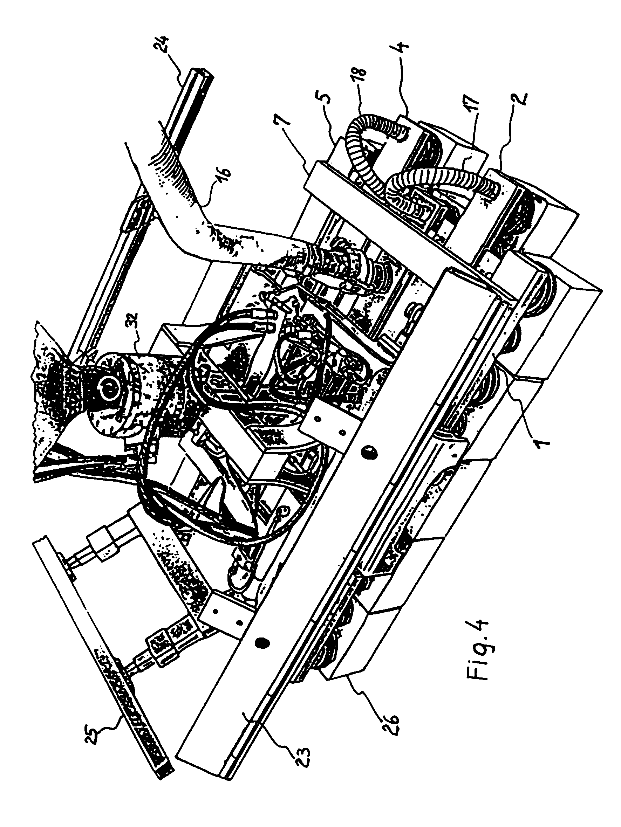

Nach diesem Vorgang erreichen die Steinreihen an den Hohlzylindern 2 und 4 die in den Figuren 4 und 5 dargestellten Positionen. Die Steinlage bildet nunmehr einen Läuferverband, der insbesondere beim Verlegen auf von Wasser überspülbaren Flächen geeignet ist, da er dem Lockerungsangriff des Wassers einen wesentlich höheren Widerstand entgegensetzt als ein Verband mit Kreuzfugen.

Der Faltenbalg 50 eines Saugstempels ist mit einem Schaft an einem der Hohlprofile, in denen Vakuum herrscht, befestigt.

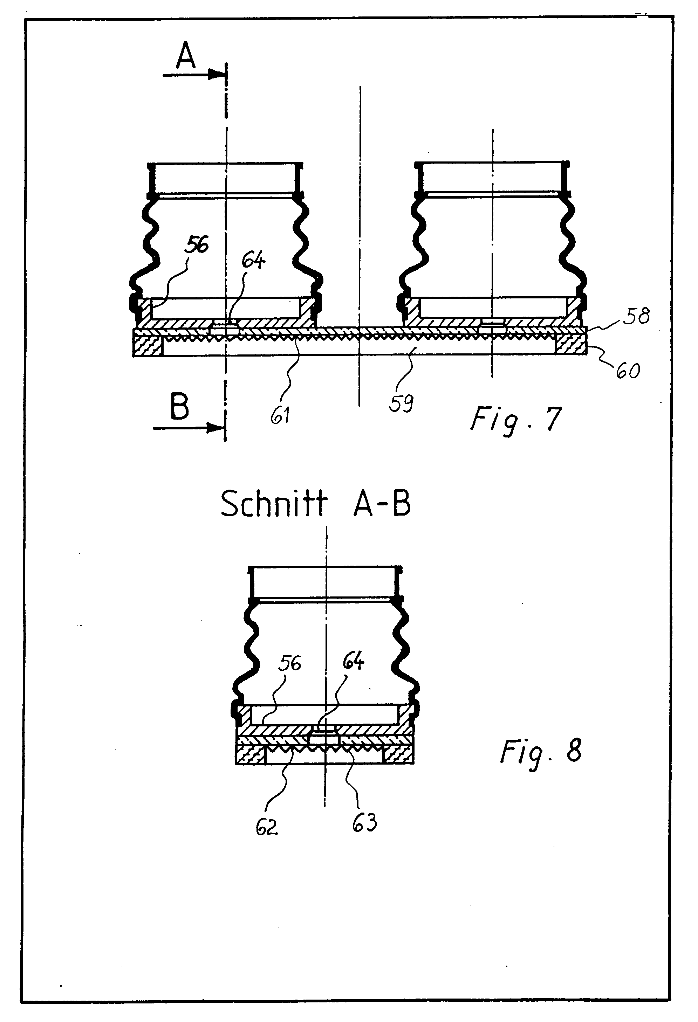

Von diesem Schaft erstrecken sich drei Falten 52, 53 und 54 bis zu einem äußeren, gegebenenfalls aus steiferem Material bestehenden zylindrischen Teil 55, in welchen eine Abschlußplatte 56 (Figuren 7 bis 10) einfügbar ist.

Die Wandstärke 57 im Bereich des Übergangs von der Falte 53 zur Falte 54 ist geringer als die des übrigen gesamten Faltenbereichs. Zusätzlich ist der Durchmesser D der äußersten, d. h. unmittelbar vor dem freien Ende des Faltenbalges, befindlichen Falte, deutlich größer als der Durchmesser d der beiden übrigen Falten 52 und 53. Beide Maßnahmen stellen eine zuverlässige Winkelbeweglichkeit bereits zu Beginn des Aufsetzens des Saughebers auf das zu hebende Objekt sicher. Zusätzlich können die die Falten bestimmenden Winkel unterschiedlich groß gehalten sein, beispielsweise zunehmend von 55° für die äußerste Falte 54, 70° für die mittlere Falte 53, bis zu 90° für die oberste Falte 52. Dadurch wird gleichzeitig die axiale Beweglichkeit der Falten unterschiedlich abgestuft, d. h. ein derart ausgebildeter Faltenbalg zeigt eine vom freien Ende ausgehende und nach oben zunehmende Steifigkeit.

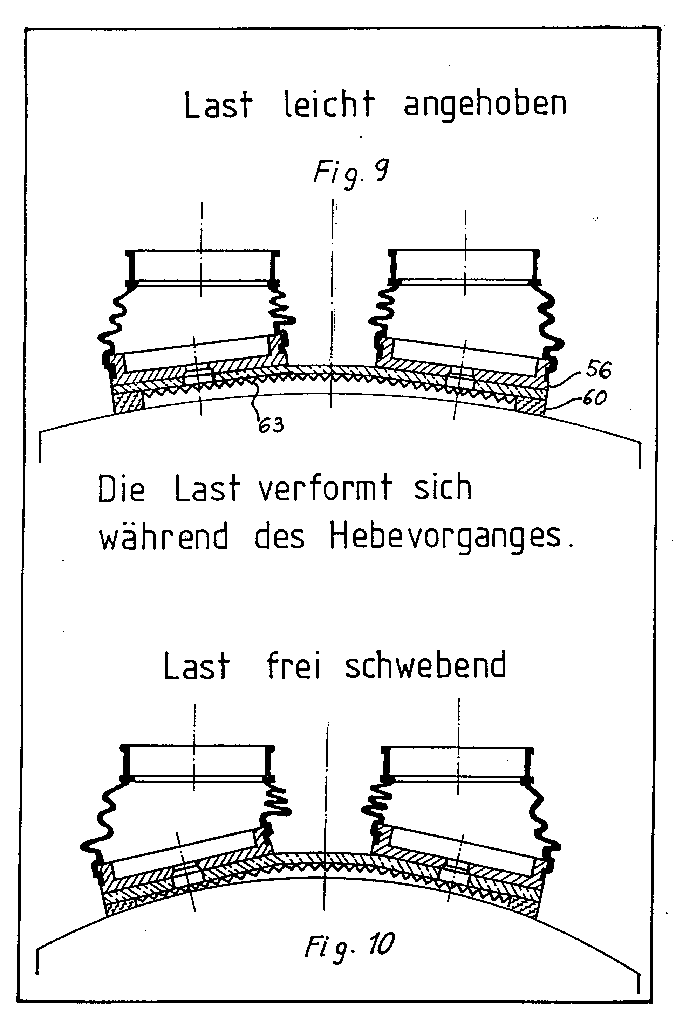

Die Figuren 7 bis 10 zeigen das Beispiel der Verbindung zweier Saugstempel mit einer gemeinsamen Saugplatte 58 aus elastomerem, d. h. ebenfalls flexiblem Material. Der Saugraum 59 wird durch diese Platte in Verbindung mit einem umlaufenden erhabenen Rand 60 aus dichtendem Material in Verbindung mit der Oberfläche des zu hebenden Objekts gebildet. Unterhalb der flexiblen Platte 58 ist diese mit einem Profil aus sich kreuzenden Nuten 61 und 62 versehen, so daß Abstandsnoppen entstehen, welche verhindern, daß, bedingt durch die Flexibilität der Platte, deren saugseitige Fläche sich unmittelbar an das Hebegut legt und dadurch die Ausbildung eines gleichmäßigen Saugfeldes verhindert, wie insbesondere die Figuren 9 und 10 zeigen. Sie lassen beispielsweise erkennen, daß es möglich ist, mit derart ausgebildeten Saugstempeln Hebegut zu erfassen, dessen Oberfläche ebenfalls aus nachgiebigem Material, beispielsweise Verpackungsmaterial, besteht, und das sich mit Beginn der Übertragung der Saugkraft von einer leichten Wölbung bis hin zu einer starken Krümmung (Fig. 10) verändert.

**Patentansprüche**

1. Saugheber zum Heben und Verlegen von Hebegut mit einem hohen spezifischen Gewicht, beispielsweise für das Heben von Betonteilen und Betonsteinen sowie Klinker und Naturpflastersteinen mit mehreren an der Unterseite des Saughebers angeordneten, die einzelenen Teile erfassenden, als Faltenbälge ausgebildeten axial- und winkelbeweglichen Saugstempeln, dadurch gekennzeichnet, daß die Saugstempel (26) an den Unterseiten mehrerer langgestreckter, nebeneinander angeordneter Hohlprofile (1, 2, 3, 4, 5), in welchen Vakuum herrscht, angebracht sind, von welchen jedes zweite Hohlprofil (2, 4) um wenigstens eine halbe Steinlänge in Längsrichtung verschiebbar ausgebildet ist.

2. Saugheber nach Anspruch 1, dadurch gekennzeichnet, daß die unbeweglichen Hohlprofile (1, 3, 5) an wenigstens zwei hohlen und tragenden Querprofilen (6, 7), in welchen ebenfalls Vakuum herrscht, kraftübertragend befestigt sind und die verschiebbaren von den unbeweglichen starren Hohlprofilen mittels seitlicher Trag- und Führungsleisten (9, 10) gehalten werden.

3. Saugheber nach den Ansprüchen 1 und/oder 2, dadurch gekennzeichnet, daß die verschiebbaren Hohlprofile über flexible Leitungen (17, 18) mit den starren Hohlprofilen verbunden sind.

4. Saugheber nach einem oder mehreren der Ansprüche 1 bis 3, dadurch gekennzeichnet, daß zum Verschieben der Hohlprofile hydraulische Stellzylinder (11, 12) vorgesehen sind.

5. Saugheber nach Anspruch 4, dadurch gekennzeichnet, daß die Stellzylinder doppelt wirkend sind.

6. Saugheber nach einem oder mehreren der Ansprüche 1 bis 5, dadurch gekennzeichnet, daß die Druckleitungen der Stellzylinder (11, 12) für die Verschiebung der Hohlprofile im Nebenschluß mit Druckleitungen von Stellzylindern (36, 37, 38) für Richtbacken verbunden sind.

7. Saugheber nach einem oder mehreren der Ansprüche 1 bis 6, dadurch gekennzeichnet, daß die verschiebbaren Hohlprofile mit einer der Verschiebung entgegenwirkenden Federvorspannung belastet sind.

8. Saugheber nach Anspruch 7, dadurch gekennzeichnet, daß die die Federvorspannung erzeugende Feder im Stellzylinder für die Hohlprofile angeordnet ist.

9. Saugheber nach einem oder mehreren der Ansprüche 1 bis 8, dadurch gekennzeichnet, daß die Wandstärke des Faltenbalges (50) eines Saugstempels im Übergangsbereich von der vorletzten zur letzten, äußersten Falte (54) am freien Ende schwächer als die des übrigen Faltenbalges ist und der Durchmesser der äußersten Falte größer ist als der Durchmesser des Balges im übrigen Faltenbereich, wobei als Faltendurchmesser der größte Durchmesser (D) im Bereich der konvexen Ausbuchtung der Falte gilt.

10. Saugheber nach einem oder mehreren der Ansprüche 1 bis 9, dadurch gekennzeichnet, daß im Wirkungsbereich des tragenden Saugquerschnitts eine Querschnittsverengung als Drosselstelle (64) vorgesehen ist.

11. Saugheber nach Anspruch 10, dadurch gekennzeichnet, daß wenigstens zwei benachbarte Saugstempel mit einem gemeinsamen Saugraum verbunden sind, dessen Form der Oberflächenwölbung eines zu hebenden Objekts angepaßt ist.

12. Saugheber nach Anspruch 11, dadurch gekennzeichnet, daß der Saugraum durch eine aus elastomerem Material bestehende Platte (58) mit einem umlaufenden, vorstehenden Rand (60) aus Dichtmaterial gebildet wird und mit den Saugstempeln über düsenförmige Luftdurchtrittsöffnungen in Verbindung steht.

13. Saugheber nach Anspruch 12, dadurch gekennzeichnet, daß die saugseitige Fläche der Platte mit einer Profilierung (61, 62, 63) versehen ist.

14. Saughebe nach Anspruch 13, dadurch gekennzeichnet, daß die Profilierung durch sich regelmäßig kreuzende Vertiefungen (61, 62) gebildet ist.

## Claims

1. A suction lifter for lifting and laying having a high specific weight, for example, for lifting concrete members and concrete blocks and also clinkers and natural paving stone, having a number of axially and angularly movable suction plungers which are constructed in the form of bellows and which are disposed on the underside of the suction lifter and engage around the individual members, characterized in that the suction plungers (26) are disposed on the undersides of a number of elongate hollow sections (1, 2, 3, 4, 5), which are disposed one beside the other and in which there is a vacuum, each second hollow section (2, 4) being constructed to slide in the longitudinal direction by at least one half length of a block.

2. A suction lifter according to Claim 1, characterized in that the immobile sections (1, 3, 5) are attached force-transmittingly to at least two supporting transverse section (6, 7) in which there is also a vacuum, whilst the displaceable hollow sections are retained by the immobile rigid hollow sections by means of lateral supporting and guide strips (9, 10).

3. A suction lifter according to Claims 1 and/or 2, characterized in that the displaceable hollow sections are connected to the rigid hollow sections via flexible lines (17, 18).

4. A suction lifter according to one or more of Claims 1 to 3, characterized in that hydraulic adjusting cylinders (11, 12) are provided for displacing the hollow sections.

5. A suction lifter according to Claim 4, characterized in that the adjusting cylinders are double-acting.

6. A suction lifter according to one or more of Claims 1 to 5, characterized in that the pressure lines of the adjusting cylinders (11, 12) for the displacement of the hollow sections are connected side by side to pressure lines of adjusting cylinders (36, 37, 38) for aligning jaws.

7. A suction lifter according to one or more of Claims 1 to 6, characterized in that the displaceable hollow sections are loaded with a spring prestressing acting contrary to the displacement.

8. A suction lifter according to Claim 7, characterized in that the spring producing the spring prestressing is disposed in the adjusting cylinder for the hollow sections.

9. A suction lifter according to one or more of Claims 1 to 8, characterized in that the wall thickness of the bellows (50) of a suction plunger is thinner at the free end in the transition zone from the last fold but one to the last, outermost fold (54) than the wall thickness of the rest of the bellows, and the diameter of the outermost fold is larger than the diameter of the bellows in the remaining zone of the fold, the diameter of the fold being taken to be the maximum diameter (D) in the zone of the convex bulge.

10. A suction lifter according to one or more of Claims 1 to 9, characterized in that a cross-sectional narrowing is provided as a restrictor (64) in the operative zone of the supporting suctional cross-section.

11. A suction lifter according to Claim 10, characterized in that at least two joining suction plungers are connected to a common suction chamber whose shape is adapted to the surface curvature of an article to be lifted.

12. A suction lifter according to Claim 11, characterized in that a suction chamber is formed by a plate (58) made of an elastomeric material having a circularly extending projecting edge (60) of sealing material and is connected to the suction plungers via nozzle-shaped air passage openings.

13. A suction lifter according to Claim 12, characterized in that the suction side surface of the plate has a profiling (61, 62, 63).

14. A suction lifter according to Claim 13, characterized in that the profiling is formed by regularly intersecting depressions (61, 62).

## Revendications

1. Elévateur à succion pour soulever et déplacer un produit à soulever ayant un poids spécifique élevé, par exemple pour le levage de pièces de béton et de blocs de béton ainsi que de clinker et de pavés naturels, avec plusieurs têtes aspirantes, mobiles axialement et angulairement, constituées par des soufflets disposés à la face inférieure de l'élévateur à succion et saisissant les différentes pièces, caractérisé en ce que les têtes aspirantes (26) sont montées sur les faces inférieures de plusieurs profilés creux allongés (1, 2, 3, 4, 5) disposés les uns à côté des autres, dans lesquels règne le vide, parmi lesquels un profilé sur deux (2, 4) est coulissant dans la direction de sa longueur sur au moins une demi-longueur de bloc.

2. Elévateur à succion suivant la revendication 1, caractérisé en ce que les profilés creux immobiles (1, 3, 5) sont fixés, avec transmission des efforts, à au moins deux profilés transversaux creux et porteurs (6, 7), dans lesquels règne également le vide, et en ce que les profilés creux coulissants sont maintenus par les profilés creux rigides immobiles au moyen de pattes latérales (9, 10) de support et de guidage.

3. Elévateur à succion suivant les revendications 1 et/ou 2, caractérisé en ce que les profilés creux coulissants sont reliés aux profilés creux rigides par des conduites souples (17, 18).

4. Elévateur à succion suivant une ou plusieurs des revendications 1 à 3, caractérisé en ce qu'il est prévu des vérins hydrauliques de réglage (11, 12) pour déplacer les profilés creux.

5. Elévateur à succion suivant la revendication 4, caractérisé en ce que les vérins de réglage sont à double action.

6. Elévateur à succion suivant une ou plusieurs des revendications 1 à 5, caractérisé en ce que les conduites sous pression des vérins de réglage (11, 12) pour le déplacement des profilés creux Sont raccordées en dérivation avec des conduites sous pression de vérins de réglage (36, 37, 38) pour des mâchoires directionnelles.

7. Elévateur à succion suivant une ou plusieurs des revendications 1 à 6, caractérisé en ce que les profilés creux coulissants sont chargés avec une précontrainte élastique s'opposant au mouvement coulissant.

8. Elévateur à succion suivant la revendication 7, caractérisé en ce que le ressort produisant la précontrainte élastique est disposé dans le vérin de réglage pour les profilés creux.

9. Elévateur à succion suivant une ou plusieurs des revendications 1 à 8, caractérisé en ce que l'épaisseur de paroi du soufflet (50) d'unetêteaspirante dans la région du passage de l'avant-dernier au dernier pli extérieur (54) à l'extrémité libre est plus faible que celle du reste du soufflet et en ce que le diamètre du pli le plus extérieur est plus grand que le diamètre du soufflet dans le reste de la région des plis, le diamètre des plis étant le plus grand diamètre (D) dans la région du renflement convexe des plis.

10. Elévateur à succion suivant une ou plusieurs des revendications 1 à 9, caractérisé en ce que, dans la zone active de la section de succion portante, il est prévu une diminution de section constituant une zone d'étranglement (64).

11. Elévateur à succion suivant la revendication 10, caractérisé en ce qu'au moins deux têtes aspirantes voisines sont reliées à une chambre de succion commune, dont la forme est adaptée à la courbure de la surface d'un objet à lever.

12. Elévateur à succion suivant la revendication 11, caractérisé en ce que la chambre de succion est formée par une plaque (58) constituée d'une matière élastomère avec un bord (60) périphérique saillant en matière d'étanchéité, et se trouve en communication avec les têtes aspirantes par des ouvertures de passage d'air en forme de tuyères.

13. Elévateur à succion suivant la revendication 12, caractérisé en ce que la face de la plaque située du côté de la succion est pourvue d'un profilage (61, 62, 63).

14. Elévateur à succion suivant la revendication 13, caractérisé en ce que le profilage est formé par des creux (61, 62) se croisant régulièrement.

## Fig. 1

Fig.2

EP 0 312 696 B1

Fig. 3

Fig.4

EP 0 312 696 B1

Fig.5

Fig. 6

Fig. 7

Schnitt A-B

Fig. 8

## Last leicht angehoben

### Fig. 9

## Die Last verformt sich während des Hebevorganges.

## Last frei schwebend

### Fig. 10